# FASCICULE DE BREVET EUROPEEN

(11) **EP 0 958 527 B1**
(45) Date de publication et mention de la délivrance du brevet: **02.10.2002**
(21) Numéro de dépôt: 98909545.0
(22) Date de dépôt: 16.02.1998
(51) Int. Cl.: G03B 42/02, G01T 1/29

(54) **PROCEDE ET DISPOSITIF DE CARTOGRAPHIE DE SOURCES DE RAYONNEMENT**
VERFAHREN UND VORRICHTUNG ZUM GRAPHISCHEN ABBILDEN VON STRAHLUNGSQUELLEN
METHOD AND DEVICE FOR MAPPING RADIATION SOURCES

(30) Priorité: 17.02.1997 FR 9701809
(43) Date de publication de la demande: 24.11.1999
(73) Titulaire: COMPAGNIE GENERALE DES MATIERES NUCLEAIRES, 78140 Velizy Villacoublay (FR)
(72) Inventeur: GUILLON, François, F-78960 Voisins-le-Bretonneux (FR); BAUSSART, Philippe, F-78990 Elancourt (FR); DALANCON, Thomas, F-78890 Guyancourt (FR)
(74) Mandataire: Des Termes, Monique
(86) Numéro de dépôt international: FR9800293
(87) Numéro de publication internationale: WO98036321

(56) Documents cités:
- EP-A- 0 610 084
- WO-A-96/20421
- WO-A-97/01769
- US-A- 5 227 969

## Description

L'invention concerne un procédé de cartographie de sources de rayonnement, afin de permettre de localiser de telles sources dans un environnement tridimensionnel qui peut être connu ou inconnu à l'origine.

L'idée de détecter des sources de rayonnement telles que des fuites radioactives en comparant une image de ces sources, prise par un appareil spécialisé, et une image visuelle ou vidéo de l'environnement prise par une caméra ordinaire, sensible à la lumière, a déjà été appliquée. L'exploitation des images peut être faite empiriquement par l'utilisateur en retrouvant sur l'image visuelle les emplacements des sources radioactives : dans une conception rudimentaire du procédé, il identifie les éléments de l'environnement, restitués sur l'image visuelle, qui correspondent aux endroits de l'image des sources sur lesquels une source a été enregistrée. L'identification de la position des sources n'est cependant pas très précise et fait appel au jugement et aux connaissances de l'utilisateur en ce qui concerne l'environnement : il peut ainsi connaître à l'avance les endroits de l'environnement où une fuite est susceptible de se produire et les identifier facilement quand elle apparaît. Si une telle méthode est suffisante dans certaines situations, elle ne se prête pas à des traitements automatiques, notamment si un travail de réparation doit être confié à un robot, qui doit connaître avec précision la position de la source dans l'espace tridimensionnel pour l'atteindre.

Dans un procédé plus perfectionné qui est décrit dans le brevet français de numéro 2 652 909, est utilisée une caméra combinée à des obturateurs et des moyens de conversion du rayonnement radioactif, qui lui permettent d'enregistrer tour à tour une image visuelle et une image d'émission radioactive de l'environnement. Les deux images sont fournies à des moyens automatiques de traitement qui les superposent, ce qui donne sans erreur la position des sources dans le champ de vue de la caméra. Mais comme ce travail est fait sur une image bidimensionnelle, le problème évoqué ci-dessus n'est pas résolu : un système d'exploitation automatique est impuissant à déterminer la distance de la source, et si elle est bien à l'emplacement d'un détail de l'environnement auquel elle se superpose, ou si elle est située devant ou derrière lui sur le rayon de visée de la caméra.

On connaît par ailleurs des procédés de tomographie qui permettent de connaître les positions de sources radioactives dans un environnement tridimensionnel ; les caméras (ou, plus généralement, les moyens de prise d'images bidimensionnelles) sont promenées autour de l'objet et les informations lues sur les images sont combinées pour en déduire les positions des sources. Cela revient à inverser, directement ou indirectement, un système d'équations exprimant que le rayonnement reçu par chaque point d'image est la somme des rayonnements émis le long de la ligne de projection ou de visée de la caméra qui aboutit à ce point. Mais il faut connaître la position de la caméra à chaque prise d'image, ce qui n'est pas toujours possible dans les situations envisagées ici, car les robots ne sont pas toujours assez précis, ni même munis de codeurs de position qui indiquent où ils sont parvenus.

Enfin, on doit citer la demande internationale de brevet WO 96/20421 qui décrit un double procédé de tomographie et la superposition de deux images tridimensionnelles ainsi obtenues, dont l'une illustre les détails visibles de l'objet examiné et l'autre représente une vue de l'objet par des rayons X ou autres. Cependant, les deux images sont calculées de la même façon et séparément (sauf pour appliquer des calculs de correction des effets de la distorsion, du grossissement, etc. produits par chacun des moyens de prise de vue) ; elles sont mises en relation d'égalité et ont la même importance.

Ce brevet ne donne donc pas l'idée d'utiliser une image visuelle de l'environnement pour aider à déterminer les positions de sources ponctuelles de rayonnement dans cet environnement, sans qu'on soit contraint de recourir aux conditions d'obtention d'images tomographiques.

L'objet de l'invention est donc de permettre de localiser complètement et avec précision des sources de rayonnement, radioactives ou autres, dans un environnement à trois dimensions.

L'idée essentielle de l'invention est qu'on utilise un modèle tridimensionnel de l'environnement, établi en préliminaire par des prises d'images visuelles, sur lequel on place les sources repérées sur d'autres images, qu'on corrèle avec les images visuelles.

Le modèle a donc non seulement pour but de fournir une représentation graphique des positions des sources dans l'environnement, mais surtout celui de contribuer à déterminer ces positions.

Sous sa forme la plus générale, l'invention concerne ainsi un procédé de cartographie tridimensionnelle de sources d'un rayonnement dans un environnement, conforme à la revendication 1.

Un dispositif permettant de réaliser ce procédé comprend un dispositif de prise d'images du rayonnement, une paire de moyens de prise d'images visuelles d'un environnement des sources du rayonnement, les moyens de prise d'images visuelles étant orientés dans des directions telles qu'ils ont tout ou partie de leur champ de vision en commun et montés avec le moyen de prise d'images du rayonnement de façon réglable sur un support commun, ainsi que des moyens de photogrammétrie aptes à reconstituer un modèle tridimensionnel visuel de l'environnement à partir des images visuelles et à superposer un modèle tridimensionnel des sources du rayonnement à partir des images du rayonnement au modèle visuel.

Le commentaire de réalisations concrètes de l'invention, données à titre illustratif et appliquée à la détection de sources de rayonnement gamma, sera maintenant développé au moyen des figures suivantes :
- la figure 1 est une vue générale des moyens mécaniques du dispositif,
- Les figures 2 et 3 sont deux détails du dispositif,
- la figure 4 illustre le procédé de cartographie,
- la figure 5 illustre la formation des images,
- la figure 6 représente une mire d'étalonnage,
- la figure 7 expose la définition géométrique de certains paramètres d'étalonnage du dispositif,
- les figures 8 et 9 sont deux organigrammes exposant les procédés d'étalonnage et de service du dispositif,
- et la figure 10 est un schéma des moyens notamment informatiques servant le dispositif.

On se reporte maintenant aux figures. La première représente l'allure générale du dispositif : un bâti 1 comprend un boîtier central 2 duquel partent deux bras latéraux 3 pointant dans des directions opposées et un appendice supérieur 4. Le boîtier central 2 contient un alvéole, ouvert vers l'avant, destiné au logement d'une gamma-caméra 6. Des vidéo-caméras 7 sont montées aux extrémités des bras latéraux 3. Enfin, un projecteur 8 est monté au sommet de l'appendice supérieur 4.

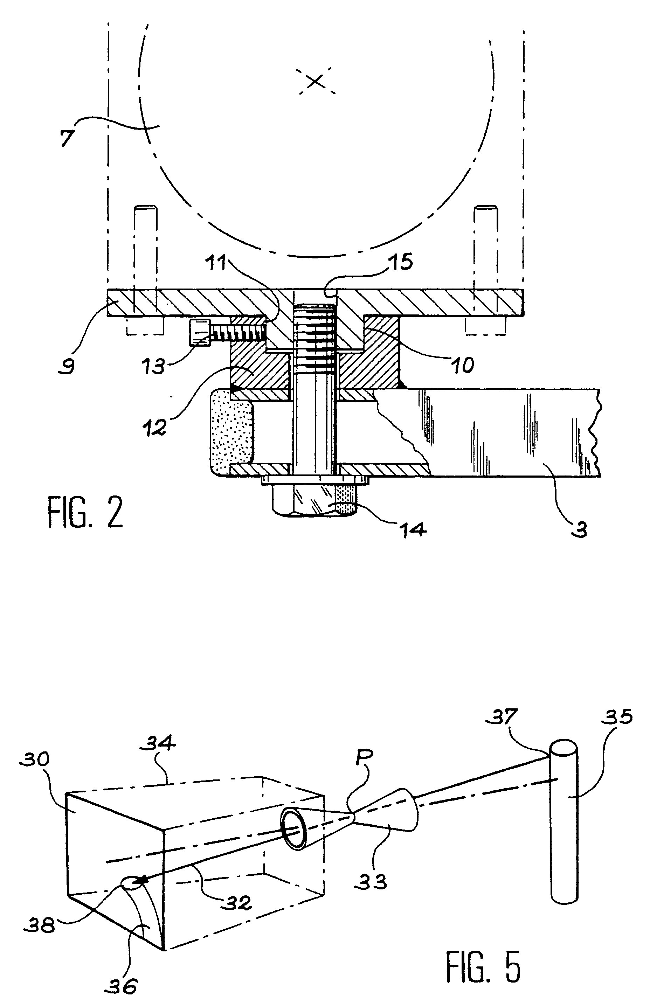

Les vidéo-caméras 7 sont vissées à des platines 9 tournantes, terminées chacune (voyez à la figure 2) par un tourillon inférieur 10 engagé dans une coupelle 11 d'une bague 12 soudée à l'extrémité du bras 3 associé. La bague 12 reçoit une vis de pression 13 latérale dont l'extrémité débouche dans la coupelle 11 et serre le tourillon inférieur 10, le maintenant en place à l'orientation souhaitée. Enfin, une vis 14 de fixation est engagée dans un taraudage 15 de la platine 9 coaxial au tourillon inférieur 10, et cette vis 14 traverse le bras latéral 3 et la bague 12 et maintient l'ensemble serré. Cette disposition permet, comme on le voit immédiatement, d'orienter à volonté les vidéo-caméras 7 dans un même plan en azimut pour leur donner l'angle de convergence souhaité.

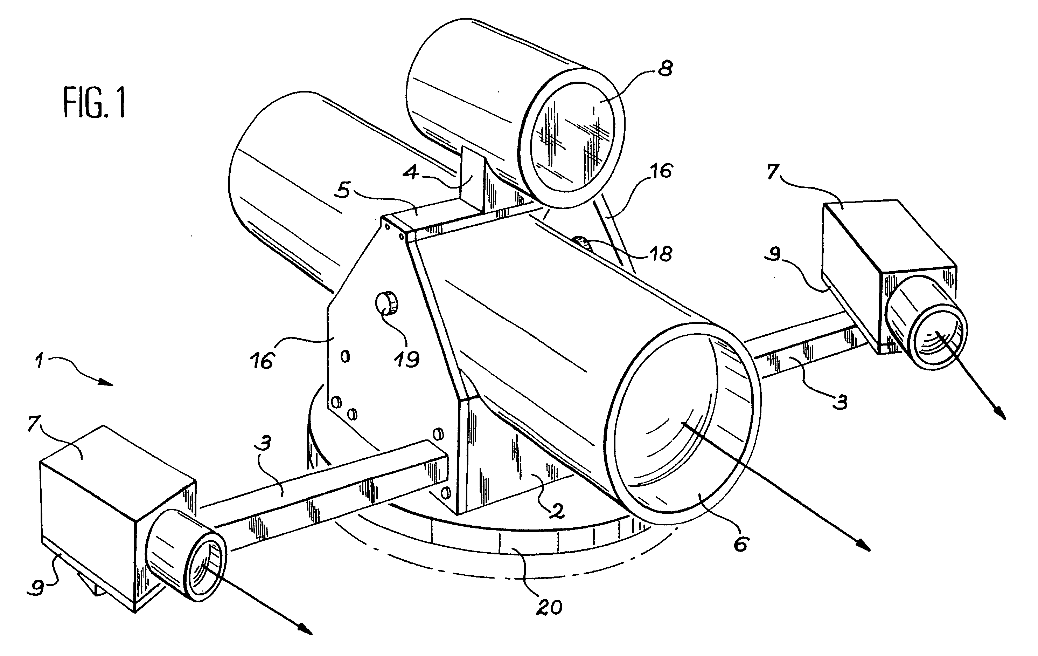

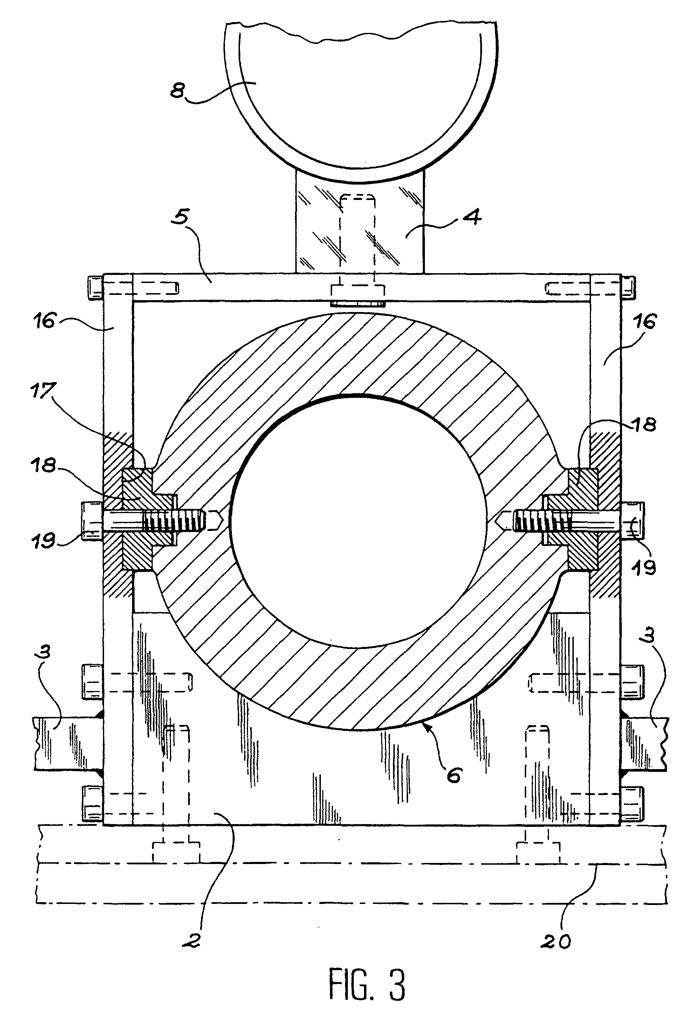

Le boîtier central 2 comprend essentiellement (voyez aux figures 1 et 3) deux parois latérales opposées 16 munies d'un enfoncement 17 pour recevoir un tourillon 18 de support de la gamma-caméra 6. Des vis 19 sont engagées à travers les parois latérales 16 et les tourillons 18 et vissées dans la gamma-caméra 6 pour la serrer dans la position voulue : il est en effet possible de la faire tourner autour d'un axe horizontal défini par les tourillons 18 quand les vis 19 sont desserrées et donc de régler son orientation en site. Le bâti 1 est monté sur un socle 20 qu'on peut prévoir tournant et qui est fixé à un support non représenté, bras de robot ou autre selon l'application.

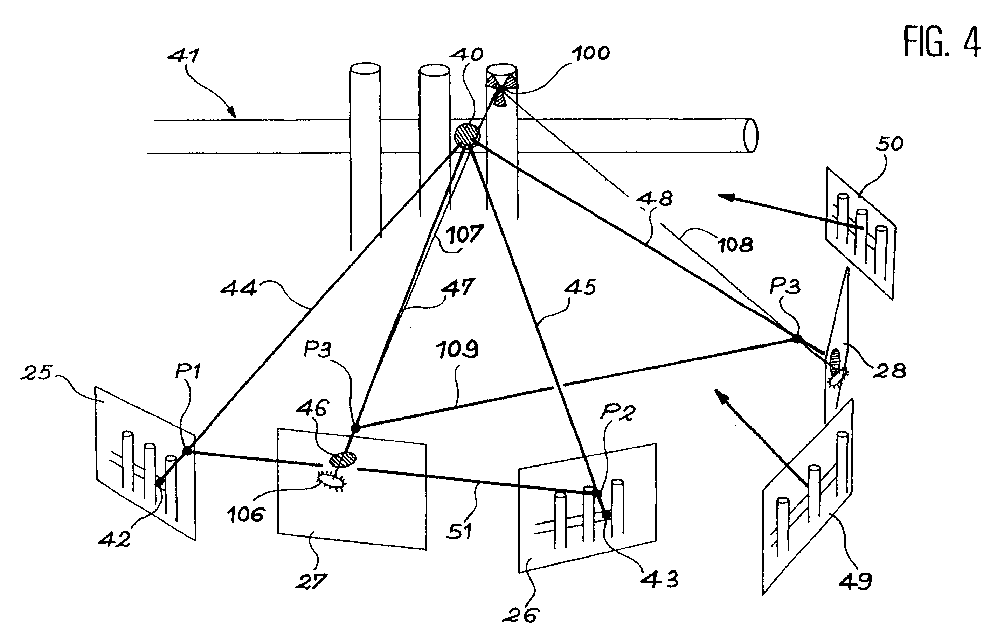

Le procédé de localisation des sources radioactives peut être décrit assez simplement à l'aide de la figure 4 : le dispositif, approché à une distance convenable de l'environnement à reconnaître, prend une première série d'images de celui-ci par les vidéo-caméras 7 et la gamma-caméra 6 sans bouger. Les deux images visuelles 25 et 26 de l'environnement ainsi obtenues représentent sensiblement le même sujet sous des angles de vue différents à partir des vidéo-caméras 7. Une comparaison automatique des images visuelles 25 et 26 et consistant identifier et à mettre en relation des points homologues des images, représentant un même détail remarquable de l'environnement, permet de déduire la position des points de l'environnement par rapport au dispositif, y compris leur distance. L'environnement peut donc être modélisé dans les trois dimensions et la position du dispositif dans l'environnement déterminée. La recherche des points homologues sur les deux images visuelles 25 et 26 est faite par un des logiciels spécialisés qui sont maintenant disponibles dans le commerce. Il existe même des logiciels capables de distinguer directement des détails complets sur une image, par une reconnaissance de forme associée à une corrélation d'images, et de les retrouver sur une image analogue.

Quand une paire de points homologues est identifiée sur les images visuelles 25 et 26, on en déduit deux lignes aboutissant aux vidéo-caméras 6 et par lesquelles le point réel sur l'environnement se projette sur les images visuelles 25 et 26. L'écart et l'angle de convergence des vidéo-caméras 6 étant connus, un calcul de triangulation élémentaire donne la position de concours des lignes de projection, c'est-à-dire la position du point dans l'environnement.

Une image 27 de sources radioactives est prise par la gamma-caméra 6. Cependant, la détermination complète de la position des sources impose de prendre une autre image de sources 28, qui est obtenue après avoir déplacé le dispositif tout en lui faisant viser le même environnement, et de comparer ces deux images de sources 27 et 28 pour évaluer la distance entre les sources et la gamma-caméra 6.

Une description plus détaillée du procédé sera maintenant donnée.

Les travaux de recherche de la position des points de l'environnement visuel et radioactif à partir des images 25 à 28 sont assurés par des logiciels de photogrammétrie joints à des calculs par triangulation, mais un étalonnage préliminaire doit être entrepris afin de déterminer les paramètres externes et internes des caméras 6 et 7, c'est-à-dire leurs positions et orientations relatives d'une part, et leurs caractéristiques de restitution de l'environnement sur les images qu'elles produisent, d'autre part.

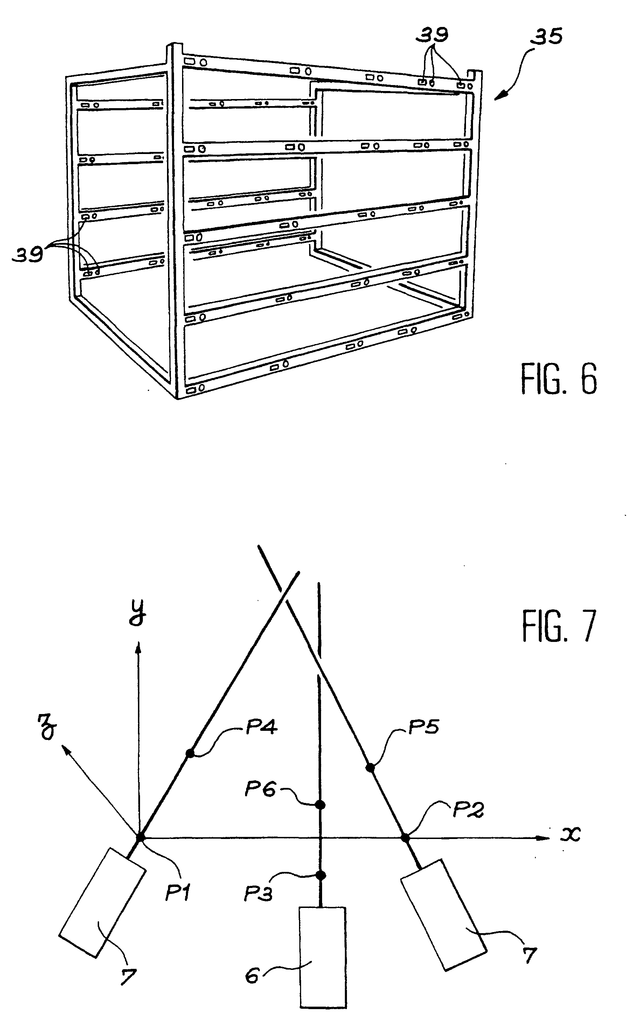

Il faut d'abord connaître les paramètres internes. La gamma-caméra 6 et les vidéo-caméras 7 peuvent être représentées (voyez à la figure 5) par un plan d'image 30, sur lequel l'image 25, 26, 27 ou 28 est prise, et un centre optique P en avant de ce plan d'image 30, par lequel passent tous les rayons 32 qui impressionnent le plan d'image 30. Le centre optique est formé par le diaphragme pour les vidéo-caméras 7 et par un collimateur 33, précédant une chambre à sténopé 34 au fond de laquelle se trouve le plan d'image 30, pour la gamma-caméra 6.

Un objet 35 visé par une caméra apparaît sur son plan d'image sous forme d'une image d'objet 36 qui peut être affectée de distorsions, mais si l'objet 35 est une mire de forme connue et la position de la caméra 6 ou 7, et en particulier du plan d'image 30 et du centre optique P, est calculée par rapport à l'objet 35, il est possible d'établir une correspondance entre chaque point 37 de l'objet 35 et le point 38 par lequel il est représenté sur le plan d'image 30, en déterminant le rayon 32 qui les relie, et qui passe par le centre optique P ; ce rayon 32 peut être complètement défini par les coordonnées du centre optique P et du point 37. L'étalonnage consiste précisément à dresser une table de correspondance entre chaque point 38 de l'image prise par la caméra 6 ou 7 et la direction de visée (le rayon 32) associée à ce point et passant par le centre optique P. Cette table est immuable pour des réglages de caméra donnés et sert à déterminer les directions des points d'objets inconnus dont les images sont prises ensuite. L'objet 35 de forme connue peut être la mire illustrée à la figure 6, composée d'un treillis de barres entrecroisées mais plutôt écartées et porteuses de points 39 identifiables avec précision qui permettent au logiciel de photogrammétrie de retrouver facilement les points remarquables de l'image et de les identifier à des points respectifs de la mire.

On comprendra alors, revenant à la figure 4, qu'un point quelconque 40 d'un objet 41 d'un environnement inconnu au départ et visé par les deux vidéo-caméras 7 apparaîtra sur les images visuelles 25 et 26 sous l'aspect de deux points 42 et 43 dont les positions sur ces images permettront de déduire les directions, sur les rayons 44 et 45, à partir des centres optiques (notés ici P1 et P2) des deux vidéo-caméras 7. L'intersection des rayons 44 et 45 est alors calculée, ce qui donne la position du point 40 par rapport aux vidéo-caméras 7. La généralisation de ce procédé à tous les couples de points homologues des images visuelles 25 et 26 permet de retrouver la forme et la position de l'objet 41 dans l'espace à trois dimensions.

Si on définit un point 100 comme une source, celui-ci apparaît aussi sur l'image de sources 27 de la gamma-caméra 6 sous l'aspect d'un point 106. La position des caméras 6 et 7 par rapport à l'objet permet en soi de connaître la direction du point 100, qui est situé sur un rayon 107. Mais il n'est pas possible d'affirmer avec certitude que l'origine du point 106 est bien le point 100 plutôt qu'un autre point du rayon 107. C'est pourquoi la seconde image de sources 28 doit être prise pour donner un second rayon 108 menant de la nouvelle position du centre optique (P3) de la gamma-caméra 6 au point 100, qui peut alors être identifié comme la source en calculant l'intersection des rayons 107 et 108. Il faut encore connaître la distance 109 entre les deux positions successives du centre optique P3 de la gamma-caméra 6, c'est-à-dire la base de la triangulation entreprise sur les rayons 107 et 108, pour déterminer la position du point 100 qui est leur intersection, et l'angle de rotation du dispositif entre les deux prises de vues. Ces deux informations peuvent être obtenues par une mesure directe des déplacements du dispositif s'il est porté par un bras de robot dont les articulations sont munies de codeurs de déplacement ; sinon, on peut recommencer une reconnaissance de l'environnement et de l'objet 101 à partir de nouvelles images visuelles 49 et 50 prises par les vidéo-caméras 7 à la seconde position du dispositif, afin de calculer celle-ci par rapport à la position de l'objet 41.

Le procédé comprend alors une synthèse des deux modèles de l'objet 101, qui peut encore être entreprise par le logiciel de recherche et d'identification de points homologues remarquables de ces modèles, afin d'évaluer leurs différences d'emplacement et d'orientation par rapport aux vidéo-caméras 7 entre les deux phases de prise de vues. Quand cette évaluation est achevée, il est possible de calculer les positions des deux lignes de projection 107 et 108 de la source dans un des modèles, et donc la position de leur point 100 de concours dans ce modèle.

Une autre variante du procédé consiste à exploiter une portion de l'image gamma 28 qui représente l'environnement 41 : les images gamma 28 obtenues par les gamma-caméras usuelles sont en effet sensibles aussi à la lumière visible, ce qui fait qu'une image de l'environnement 41 est superposée à l'image des sources. Cette image de l'environnement est souvent trop tenue et trop floue pour fournir un modèle convenable de l'environnement 41 (quoique des exceptions puissent être envisagées, de sorte que l'invention pourrait alors être appliquée avec une seule caméra, les images visuelles étant toutes superposables à des images gamma), mais on peut la corréler au modèle déjà obtenu par les vidéo-caméras 7, par le logiciel déjà mentionné, pour calculer ici encore les positions des lignes de projection 107 et 108 de la source dans le modèle.

Le procédé peut, d'une façon générale, être accompli avec une seule caméra visuelle 7, à condition de disposer d'une mesure des positions de prise d'image pour servir de base aux triangulations de construction du modèle de l'environnement visuel, ou d'autres informations, dont quelques exemples sont donnés ci-dessous.

On préfère toutefois appliquer l'invention avec le dispositif décrit en détail, qui comprend trois caméras au total, car le modèle de l'environnement peut être construit beaucoup plus vite, sans déplacer le dispositif entre deux prises d'image et en utilisant des logiciels plus efficaces pour mener à bien les calculs de triangulation.

Il permet de travailler « en temps réel », si par exemple il est monté sur un bras de robot devant manipuler les sources : la position des sources est alors calculée pendant que le bras avance, et les deux instants de prise de vue correspondent à deux phases de l'avance du bras. On a aussi la certitude que les deux images visuelles 25, distantes d'une base connue, seront similaires et que la recherche de points homologues sera presque toujours fructueuse.

On donnera maintenant les règles de détermination des paramètres externes du dispositif ; cette détermination est faite avant de se servir du dispositif selon la figure 4 et elle suit immédiatement la détermination, explicitée plus haut, des paramètres internes du dispositif ; elle constitue donc une seconde partie de l'étalonnage du dispositif.

La modélisation de l'objet 40, effectuée sur les images visuelles 25 et 26, nécessitait aussi de recourir à une triangulation et donc de connaître une base de triangulation, qui correspondait à la distance 51 entre les vidéo-caméras 7. Une variante consiste à utiliser de multiples positions du dispositif couplées à une information connue de longueur issue d'un plan ou d'un étalon placé dans la scène d'une part, et à un logiciel de calcul d'ajustement de faisceau d'autre part. Il était aussi nécessaire de connaître la position du centre optique P3 de la gamma-caméra 6 pour déterminer la position du rayon 47. Ces paramètres externes du dispositif peuvent être exprimés par un fichier des coordonnées de six points, comme le montre la figure 7 : les trois centres optiques P1, P2 et P3 des caméras 6 et 7 et trois points alignés avec ces centres optiques respectifs sur les axes centraux de visée des caméras 6 et 7 ; ces derniers points sont numérotés P4, P5 et P6 et peuvent être situés à des distances quelconques, identiques ou non, des points P1 à P3 auxquels ils sont respectivement associés. Il n'y a pas non plus de contrainte sur les positions et les orientations relatives des axes centraux de visée, qui peuvent se couper ou non, quoique les axes des vidéo-caméras 7 soient supposés se couper dans la réalisation effectivement proposée ; il est ainsi possible de régler sans contrainte particulière les positions des caméras 6 et 7 sur les bras latéraux 3 et le bâti 1. Les paramètres externes des caméras peuvent donc être résumés sur le tableau suivant :

| | | |
|---|---|---|
| x(P1) | y(P1) | z(P1) |
| x(P2) | y(P2) | z(P2) |
| x(P3) | y(P3) | z(P3) |
| x(P4) | y(P4) | z(P4) |
| x(P5) | y(P5) | z(P5) |
| x(P6) | y(P6) | z(P6) |

où x, y et z désignent les coordonnées cartésiennes du point P considéré. Le repère de mesure des coordonnées peut être choisi à volonté, par exemple avec l'origine en P1, l'axe x passant par P2 et l'axe de visée central P1P4 inclus dans le plan des axes x et y. Dans ces conditions, on peut écrire x(P1)=y(P1)=z(P1)=y(P2)=z(P2)=z(P4)=0. Ces sept contraintes fixent les sept segrés de liberté du dispositif, soit 3 rotations, 3 translations et une base de distance. Toutes ces coordonnées peuvent être calculées par des triangulations d'étalonnage entreprises en faisant tourner le dispositif autour de la mire de la figure 6 et en le plaçant à des positions différentes pour prendre des séries de vues : on connaît alors les distances des centres optiques P1, P2 et P3 des caméras 6 et 7 à la mire, et dès qu'un point remarquable de la mire est repéré sur les images des caméras 6 et 7, on détermine les directions des rayons qui le relient aux centres optiques P1, P2 et P3 en fonction de la table de correspondance établie précédemment, et finalement les positions relatives des centres optiques P1, P2 et P3, puis des positions convenables pour les points P4, P5 et P6. Les calculs des positions des points P1 à P6 sont entrepris pour plusieurs positions remarquables de la mire afin de disposer de données plus nombreuses dont la moyenne est finalement faite.

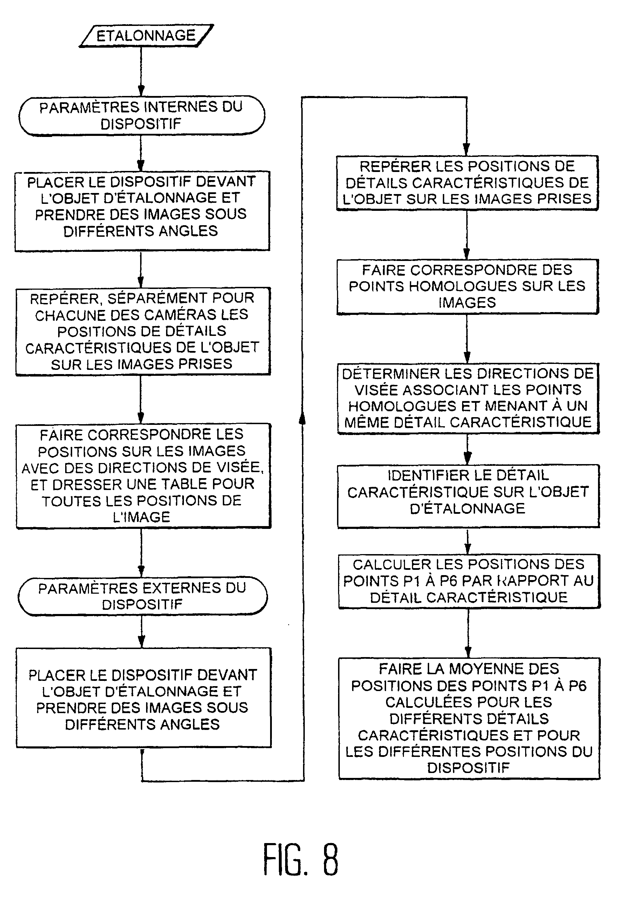

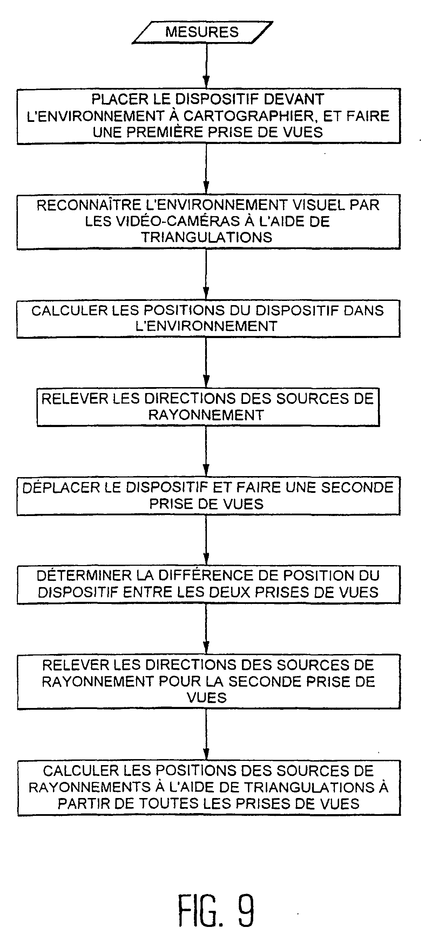

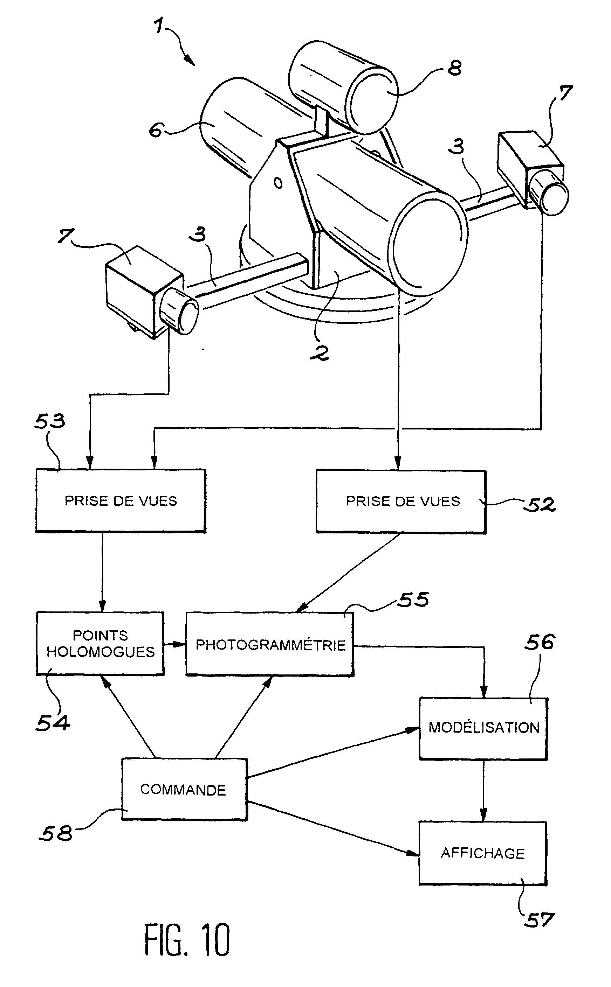

Les figures 8 et 9 sont des organigrammes qui rappellent les étapes parcourues pour étalonner le dispositif puis l'employer pour réaliser une cartographie. Un schéma complet du système d'exploitation du dispositif est enfin donné à la figure 10 : on y trouve un premier module de prise de vues 52 relié à la gamma-caméra 6 et qui enregistre ses images ; un second module de prise de vues 53 relié aux vidéo-caméras 7 et qui enregistre leurs images ; un module de recherche de points homologues 54 relié au second module de prise de vues 53 et qui recherche les points homologues, correspondant à un même point de l'objet visé, présents sur les images des deux vidéo-caméras 7 ; un module de photogrammétrie 55 qui établit essentiellement les directions des points de l'objet visé en fonction des positions des images de ces points sur les vues ; un module de modélisation 56 qui calcule les positions des points de l'objet par rapport au dispositif ; un module d'affichage 57 ; et un module de commande 58 responsable de la marche des quatre modules précédents, de leurs relations et du déclenchement des prises de vues. Tous ces modules peuvent en réalité être groupés sur un même ordinateur et matérialisés surtout par un logiciel.

## Revendications

1. Procédé de cartographie tridimensionnelle de sources (100) d'un rayonnement dans un environnement (41), comprenant une première prise d'image visuelle (25) de l'environnement et une première prise d'image des sources (27), une seconde prise d'image visuelle (26) de l'environnement et une seconde prise d'image des sources (28), les images visuelles étant prises sous des angles différents, puis un établissement d'un modèle tridimensionnel visuel de l'environnement, **caractérisé en ce que** les images des sources sont aussi prises sous des angles différents et le modèle est établi par : une recherche et une identification d'éléments homologues des images visuelles, puis par des calculs de localisation des éléments homologues des images visuelles ; et **en ce que** le procédé comprend encore : une localisation dans le modèle de l'environnement de lignes de projection des sources, cette localisation étant faite à l'aide de relations entre les positions et les orientations des moyens par lesquels les images visuelles et les images des sources sont prises, et les lignes de projection étant orientées dans des directions de visée respectives et connues à l'avance du moyen de prise d'image des sources qui passent par les images des sources ; et des calculs de positions de points de concours des lignes de projection dans le modèle de l'environnement, ces points de concours étant les positions des sources.

2. Procédé selon la revendication 1, **caractérisé en ce qu'**il comprend une mesure de déplacement en distance et en orientation d'un moyen de prise d'images des sources entre la première et la seconde image des sources.

3. Procédé selon l'une quelconque des revendications 1 ou 2, **caractérisé en ce qu'**il comprend une mesure d'écart des positions en distance et en orientation de moyens de prise d'images visuelles entre une position de prise de la première image visuelle et une position de prise de la seconde image visuelle.

4. Procédé selon l'une quelconque des revendications 1 à 3, **caractérisé en ce que** les images des sources sont respectivement superposables à des images visuelles de l'environnement prises sur un même moyen de prise d'images.

5. Procédé selon la revendication 4, **caractérisé en ce que** les lignes de projection menant des sources à la seconde image des sources sont localisées sur ladite image visuelle à laquelle la seconde image des sources est superposable, puis dans le modèle tridimensionnel après avoir identifié des éléments homologues du modèle et de ladite image visuelle.

6. Procédé selon l'une quelconque des revendications 1 à 3, **caractérisé en ce qu'**il comprend un établissement d'une seconde cartographie tridimensionnelle de l'environnement par une comparaison d'une troisième et d'une quatrième image visuelle de l'environnement, les lignes de projection menant des sources à la seconde image des sources sont localisées sur ledit second modèle puis sur le premier modèle après avoir identifié des éléments homologues des modèles.

7. Procédé selon l'une quelconque des revendications 1 à 6, **caractérisé en ce qu'**il comprend une étape d'étalonnage préliminaire comprenant notamment une correction de distorsion éventuelle des images en établissant une table de correspondance entre des points (38) des images et des directions de visée (32) d'un objet (35) connu à une position déterminée des moyens de prise d'image (6, 7).

8. Procédé selon l'une quelconque des revendications 1 à 7, **caractérisé en ce qu'**il comprend une étape d'étalonnage préliminaire consistant en une évaluation de position de centres optiques (P1, P2, P3) de moyens de prise d'images par rapport à un objet (35) connu et une évaluation de direction (P1P4, P2P5, P3P6) d'axes de visée centraux des dispositifs de prise d'images (6, 7).

9. Procédé selon la revendication 1, **caractérisé en ce qu'**il est accompli avec un dispositif de cartographie de sources d'un rayonnement (40), comprenant un moyen (6) de prise d'images du rayonnement (27, 28), une paire de moyens (7) de prise d'images visuelles (25, 26) d'un environnement (41) des sources du rayonnement, les moyens de prise d'images visuelles étant orientés dans des directions telles qu'ils ont tout ou partie de leur champ de vision en commun et montés avec le moyen de prise d'images du rayonnement de façon réglable sur un support commun (1), ainsi que des moyens de photogrammétrie (55) aptes à reconstituer un modèle tridimensionnel visuel de l'environnement à partir des images visuelles et à superposer un modèle tridimensionnel des sources du rayonnement à partir des images du rayonnement au modèle visuel.

10. Procédé selon la revendication 9, **caractérisé en ce qu'**il comprend l'exploitation des moyens de réglage (10, 11, 18) de la position des moyens (6, 7) de prise d'image sur le support commun.

11. Procédé selon la revendication 10, **caractérisé en ce que** les moyens de réglage comprennent des pivots (10) des moyens de prise d'images visuelles (7) pour régler un angle de convergence desdits dispositifs de prise d'images visuelles.

12. Procédé selon l'une quelconque des revendications 9 à 11, **caractérisé en ce qu'**il comprend l'exploitation d'une mire d'étalonnage (35).

## Claims

1. A method for the three-dimensional mapping of sources (100) of a radiation in an environment (41), comprising a first taking of a visual image (25) of the environment and a first taking of an image of the sources (27), a second taking of a visual image (26) of the environment and a second taking of an image of the sources (28), the visual images being taken under different angles, followed by the establishment of a visual, three-dimensional model of the environment, **characterized in that** the images of the sources are also taken under different angles and the model is established by seeking and identifying homologous elements of the visual images, then by calculations of the location of the homologous elements of the visual images and **in that** the method also comprises a location in the model of the environment of projection lines of the sources, said location taking place with the aid of relations between the positions and orientations of the means by which the visual images and the images of the sources are taken and the projection lines are oriented in the respective, previously known sighting directions of the means for taking the image of the sources and passing through the images of the sources and calculations of positions of coincidence points of the projection lines in the model of the environment, said coincidence points being the positions of the sources.

2. A method as claimed in claim 1, **characterized in that** it comprises a measurement of movement in distance and orientation of a means of taking images of the sources between the first and second image of the sources.

3. A method as claimed in any of claims 1 to 2, **characterized in that** it comprises a measurement of difference between the positions, in terms of distance and orientation, of means of taking visual images, between a position of taking the first visual image and a position of taking the second visual image.

4. A method as claimed in any of claims 1 to 3, **characterized in that** the images of the sources can respectively be superimposed on visual images of the environment taken on the same means of taking images.

5. A method as claimed in claim 4, **characterized in that** the projection lines leading from the sources to the second image of the sources are located on said visual image on which the second image of the sources can be superimposed, then in the three-dimensional model after having identified homologous elements of the model and of said visual image.

6. A method as claimed in any of claims 1 to 3, **characterized in that** it comprises an establishment of a second three-dimensional mapping of the environment by means of a comparison of a third and a fourth visual image of the environment, the projection lines leading from the sources to the second image of the sources being located on said second model and then on the first model after having identified homologous elements of the models.

7. A method as claimed in any of claims 1 to 6, **characterized in that** it comprises a preliminary calibration step comprising notably a correction of any distortion in the images by establishing a look-up table between points (38) on the images and directions of sight (32) of a known object (35) at a given position of the image taking means (6, 7).

8. A method as claimed in any of claims 1 to 7, **characterized in that** it comprises a preliminary calibration step consisting of an assessment of position of optical centres (P1, P2, P3) of image-taking means with respect to a known object (35) and an assessment of direction (P1P4, P2P5, P3P6) of central axes of sight of the image-taking devices (6, 7).

9. A method according to claim 1, **characterized in that** it is performed with a device for mapping sources of radiation (40) comprising a device (6) for taking images of the radiation (27, 28), a pair of means (7) of taking visual images (25, 26) of an environment (41) of the radiation sources, the means of taking visual images being oriented in directions such that they have all or part of their field of vision in common and are mounted on a rigid common support (1) which is non-deformable but adjustable with the means of taking images of the radiation, and photogrammetry means (55) able to reconstitute a visual three-dimensional model of the environment from the visual images and to superimpose a three-dimensional model of the radiation sources using images of the radiation on the visual model.

10. A method as claimed in claim 9, **characterized in that** it comprises means (10, 11, 18) of adjusting the position of the image-taking means (6, 7) on the common support.

11. A method as claimed in claim 10, **characterized in that** the adjustment means comprise pivots (10) for the visual image-taking means (7) for adjusting an angle of convergence of said devices for taking luminous images.

12. A method as claimed in any of claims 9 to 11, **characterized in that** it comprises a calibration sight (35).

## Patentansprüche

1. Verfahren zum dreidimensionalen Kartographieren von Strahlungsquellen (100) in einem Umfeld (41), das eine erste visuelle Bildaufnahme (25) des Umfelds und eine erste Bildaufnahme der Strahlungsquellen (27), eine zweite visuelle Bildaufnahme (26) des Umfelds und eine zweite Bildaufnahme der Strahlungsquellen (28) umfaßt, wobei die visuellen Bilder aus verschiedenen Winkeln aufgenommen werden, gefolgt von der Erstellung eines dreidimensionalen visuellen Modells des Umfelds, **dadurch gekennzeichnet, daß** die Bilder der Strahlungsquellen ebenfalls aus verschiedenen Winkeln aufgenommen werden und daß das Modell mittels Suche und Bestimmung homologer Elemente der visuellen Bilder und anschließender Berechnung der Position der homologen Elemente der visuellen Bilder erstellt wird; sowie dadurch, daß das Verfahren ferner eine Lokalisierung von Projektionslinien der Strahlungsquellen im Modell des Umfelds umfaßt, wobei diese Lokalisierung anhand der Beziehungen zwischen den Positionen und Ausrichtungen der Mittel vorgenommen wird, mittels derer die visuellen Bilder und die Bilder der Strahlungsquellen aufgenommen werden, und wobei die Projektionslinien beim Vorschub des Mittels zum Aufnehmen der Bilder der Strahlungsquellen, die durch die Bilder der Strahlungsquellen hindurch verlaufen, entsprechend den jeweiligen und bekannten Erfassungslinien ausgerichtet werden; in Ergänzung zur Berechnung der Position der Überschneidungspunkte der Projektionslinien im Modell des Umfelds, wobei diese Überschneidungspunkte den Positionen der Strahlungsquellen entsprechen.

2. Verfahren gemäß Anspruch 1, **dadurch gekennzeichnet, daß** es die Messung der Entfernungs- und Ausrichtungsverschiebung eines Mittels zur Bildaufnahme der Strahlungsquellen zwischen dem ersten und dem zweiten Bild der Strahlungsquellen umfaßt.

3. Verfahren gemäß einem der Ansprüche 1 oder 2, **dadurch gekennzeichnet, daß** es die Messung des Abstands der Entfernungs- und Ausrichtungspositionen von Mitteln zur Aufnahme visueller Bilder zwischen einer Aufnahmeposition des ersten visuellen Bildes und einer Aufnahmeposition des zweiten visuellen Bildes umfaßt.

4. Verfahren gemäß einem der Ansprüche 1 bis 3, **dadurch gekennzeichnet, daß** die Bilder der Strahlungsquellen jeweils mit visuellen Bildern des Umfelds übereinander gelegt werden können, die mittels ein und desselben Bildaufnahmemittels aufgenommen wurden.

5. Verfahren gemäß Anspruch 4, **dadurch gekennzeichnet, daß** die Projektionslinien, die von den Strahlungsquellen zum zweiten Bild der Strahlungsquellen verlaufen, im besagten visuellen Bild, mit dem das besagte zweite Bild der Strahlungsquellen übereinander gelegt werden kann, und anschließend, nachdem die homologen Elemente des Modells und des besagten visuellen Bildes bestimmt wurden, im dreidimensionalen Modell lokalisiert werden.

6. Verfahren gemäß einem der Ansprüche 1 bis 3, **dadurch gekennzeichnet, daß** es die Erstellung einer zweiten dreidimensionalen Kartographie des Umfelds anhand eines Vergleichs eines dritten und eines vierten visuellen Bildes des Umfelds umfaßt, wobei die Projektionslinien, die von den Strahlungsquellen zum zweiten Bild der Strahlungsquellen verlaufen, im besagten zweiten Modell und anschließend im ersten Modell lokalisiert werden, nachdem die homologen Elemente der Modelle bestimmt wurden.

7. Verfahren gemäß einem der Ansprüche 1 bis 6, **dadurch gekennzeichnet, daß** es einen vorbereitenden Eichschritt umfaßt, der insbesondere die Korrektur einer eventuellen Verzerrung der Bilder einschließt, anhand der Erstellung einer Tabelle der Entsprechungen zwischen den Punkten (38) der Bilder und den Erfassungsausrichtungen (32) eines bekannten Objekts (35) mit einer vorgegebenen Position der Mittel zur Bildaufnahme (6, 7).

8. Verfahren gemäß einem der Ansprüche 1 bis 7, **dadurch gekennzeichnet, daß** es einen vorbereitenden Eichschritt umfaßt, der in einer Bewertung der Position optischer Zentren (P1, P2, P3) von Mitteln zur Bildaufnahme in bezug auf ein bekanntes Objekt (35) und in einer Bewertung der Ausrichtung (P1P4, P2P5, P3P6) mittiger Erfassungsachsen der Vorrichtungen zur Bildaufnahme (6, 7) besteht.

9. Verfahren gemäß Anspruch 1, **dadurch gekennzeichnet, daß** es mit einer Vorrichtung zum Kartographieren von Strahlungsquellen (40) ausgeführt wird, die folgendes umfaßt: ein Mittel (6) zur Aufnahme von Bildern der Strahlung (27, 28), ein Paar von Mitteln (7) zur Aufnahme visueller Bilder (25, 26) eines Umfelds (41) der Strahlungsquellen, wobei die Mittel zur Aufnahme der visuellen Bilder entsprechend den Richtungen ausgerichtet sind, die sie jeweils vollständig oder teilweise in ihrem Sichtfeld gemeinsam haben, und so montiert sind, daß die Mittel zur Aufnahme der visuellen Bilder auf einstellbare Weise auf einer gemeinsamen Halterung (1) montiert sind, sowie Mittel zur Photogrammetrie (55), die dazu geeignet sind, anhand der visuellen Bilder ein dreidimensionales visuelles Modell des Umfelds zu erstellen und ein dreidimensionales Modell der Strahlungsquellen anhand der Strahlungsbilder über das visuelle Modell zu legen.

10. Verfahren gemäß Anspruch 9, **dadurch gekennzeichnet, daß** es die Nutzung der Mittel (10, 11, 18) zum Einstellen der Position der Mittel (6, 8) zur Bildaufnahme auf einer gemeinsamen Halterung umfaßt.

11. Verfahren gemäß Anspruch 10, **dadurch gekennzeichnet, daß** die Einstellmittel Drehzapfen (10) der Mittel zur Aufnahme visueller Bilder (7) umfassen, um einen Konvergenzwinkel der besagten Vorrichtungen zur Aufnahme visueller Bilder einzustellen.

12. Verfahren gemäß einem der Ansprüche 9 bis 11, **dadurch gekennzeichnet, daß** es die Nutzung eines Eichvisiers (35) umfaßt.
